# EUROPÄISCHE PATENTSCHRIFT

(11) **EP 3 524 955 B1**
(45) Veröffentlichungstag und Bekanntmachung des Hinweises auf die Patenterteilung: **04.11.2020**
(21) Anmeldenummer: 18156031.9
(22) Anmeldetag: 09.02.2018
(51) Int. Cl.: G01M 7/04, G01M 13/00, G01N 3/22, G01N 3/32

(54) **RESONANZ-TORSIONSPRÜFEINRICHTUNG**
RESONANCE TORSION TEST BENCH
BANC DE TEST DE TORSION PAR RÉSONANCE

(43) Veröffentlichungstag der Anmeldung: 14.08.2019
(73) Patentinhaber: Hug, Joachim, 38678 Clausthal-Zellerfeld (DE); Henze, Sven, 38678 Clausthal-Zellerfeld (DE)
(72) Erfinder: Hug, Joachim, 38678 Clausthal-Zellerfeld (DE); Henze, Sven, 38678 Clausthal-Zellerfeld (DE)
(74) Vertreter: REHBERG HÜPPE + PARTNER

(56) Entgegenhaltungen:
- DE-A1-102015 217 313
- US-A- 3 661 012

## Beschreibung

### TECHNISCHES GEBIET DER ERFINDUNG

Die Erfindung betrifft eine Resonanz-Torsionsprüfeinrichtung. Mittels derartigen Resonanz-Torsionsprüfeinrichtungen wird ein Prüfling mit einer Torsionslast beaufschlagt. Bei dem Prüfling kann es sich um ein beliebiges Werkstück oder Bauelement, bspw. ein Bauteil eines Kraftfahrzeugs, handeln, welches im Betrieb mit einer Torsionslast beaufschlagt wird. Bei dem Prüfling handelt es sich bspw. um eine Antriebswelle, eine Gelenkwelle oder Kurbelwelle oder eine beliebige andere, insbesondere lange Welle. Die Resonanz-Torsionsprüfeinrichtung findet bspw. Einsatz zur Untersuchung einer Betriebsfestigkeit oder Schwingfestigkeit des Prüflings (insbesondere Dauer- und Zeitfestigkeit), zur Abschätzung einer Lebensdauer des Prüflings und/oder zur Schadensanalyse. Für die hier einschlägigen Resonanz-Torsionsprüfeinrichtungen verfügt die den Prüfling beaufschlagende Prüflast über eine statische Prüflastkomponente, nämlich ein statisches Torsionsmoment, sowie eine überlagerte dynamische Prüflastkomponente, nämlich ein dynamisches Torsionsmoment, welches vorzugsweise einen periodischen, harmonischen Verlauf mit konstanter Amplitude hat. Bei den hier einschlägigen Resonanz-Torsionsprüfeinrichtungen erfolgt die Erzeugung der dynamischen Prüflastkomponente mittels eines Torsions-Schwingungssystems, welches über einen Aktuator in Resonanz zu Torsionsschwingungen angeregt wird. Die Nutzung der Resonanzschwingung des Torsions-Schwingungssystems ermöglicht eine Erzeugung großer dynamischer Prüflastkomponenten bei einem verhältnismäßig kleinen Energieeintrag durch den Aktuator.

### STAND DER TECHNIK

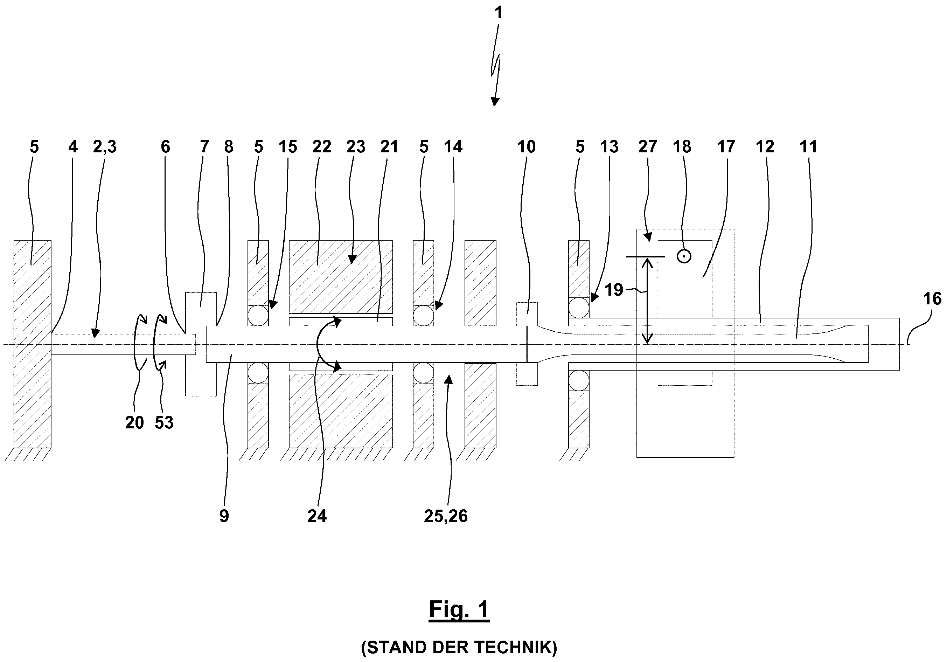

Fig. 1 zeigt eine Resonanz-Torsionsprüfeinrichtung 1 gemäß dem Stand der Technik. In der Resonanz-Torsionsprüfeinrichtung 1 ist ein Prüfling 2, hier eine Welle 3, in einem Endbereich in einer Aufnahme 4 eines Fundaments 5 drehfest gehalten oder eingespannt. Hierbei kann zwischen der Aufnahme 4 des Fundaments 5 und der Welle 3 ein Torsionsaufnehmer zwischengeordnet sein, welcher die die Welle 3 beaufschlagende Prüflast erfasst, womit dann eine Regelung des die Prüflast erzeugenden Aktuators möglich ist. In dem anderen Endbereich ist der Prüfling 2 in einer Aufnahme 6 drehfest gehalten oder eingespannt. Die Aufnahme 6 ist hier Bestandteil eines Kopplungskörpers 7, der auf der der Aufnahme 6 gegenüberliegenden Seite eine Aufnahme 8 ausbildet, in welcher eine Belastungswelle 9 drehfest gehalten oder eingespannt ist. Die Belastungswelle 9 ist über eine drehfeste Kupplung 10 mit einer Torsionswelle 11 verbunden. In dem der Kupplung 10 abgewandten Endbereich ist die Torsionswelle 11 drehfest mit einer Belastungshülse 12 verbunden. Die Belastungshülse 12 erstreckt sich von dem Verbindungsbereich mit der Torsionswelle 11 wieder zurück in Richtung der Kupplung 10. Hierbei erstreckt sich die Torsionswelle 11 im Inneren der Belastungshülse 12. Der der Kupplung 10 zugewandte Endbereich der Belastungshülse 12 ist über ein Lager 13 an dem Fundament 5 gelagert. Die Belastungswelle 9 ist entsprechend über Lager 14, 15 gegenüber dem Fundament 5 gelagert.

Die Belastungshülse 12 trägt einen radial zu einer Längs- und Rotationsachse 16 orientierten Belastungshebel 17. Über einen hier nicht näher dargestellten Aktuator wird der Belastungshebel 17 mit einer in Umfangsrichtung um die Längs- und Rotationsachse 16 wirkenden grundsätzlich statischen Last 18 beaufschlagt. Aus dem Produkt des Hebelarms 19 zwischen dem Einleitungsort der statischen Last 18 und der Längs- und Rotationsachse 16 und der statischen Last 18 ergibt sich eine statische Prüflastkomponente 20 in Form eines statischen Torsionsmomentes. Die statische Prüflastkomponente 20 wirkt über den Belastungshebel 17, die Belastungshülse 12, die Torsionswelle 11, die Kupplung 10, die Belastungswelle 9, den Kopplungskörper 7 und die Aufnahme 6 auf den Prüfling 2. Die statische Last 18 wird weggesteuert , bspw. mittels eines Spindeltriebs, aufgebracht, indem der Einleitungsort der statischen Last 18 an dem Belastungshebel 17 so weit in Umfangsrichtung (oder für hinreichend kleine Auslenkwinkel tangential zu dieser) verschoben wird, bis die gewünschte statische Prüflastkomponente 20 erzeugt worden ist. Alternativ möglich ist, dass die statische Last 18 mit einer Momentensteuerung oder -regelung, insbesondere auf Grundlage des Signals eines Torsionsaufnehmers, der zwischen dem Prüfling 2 und der Aufnahme 4 angeordnet ist, erzeugt wird. Eine einmal derart über den Aktuator herbeigeführte Umfangsposition des Einleitungsorts der statischen Last 18 oder eine Stellung des Belastungshebels 17 wird dann im Folgenden durch den Aktuator gesichert. Hierbei erfolgt durch den Aktuator auch eine Nachregelung der statischen Last 18 bei einem etwaigen Setzen der mit der statischen Last 18 beaufschlagten Bauelemente.

Die Belastungswelle 9 trägt im Bereich Ihrer Mantelfläche einen Rotor 21. Der Rotor 21 ist drehbar gelagert in einem Stator 22. Der Rotor 21 und der Stator 22 bilden einen elektrischen Aktuator 23, welcher hier ein elektrisch gesteuerter Antriebsmotor ist. DerAktuator 23 wird derart elektrisch geregelt, dass dieser eine dynamische Last 24 erzeugt, bei der es sich um ein dynamisches Torsionsmoment handelt und mit der die Belastungswelle 9 (und über den Kopplungskörper 7 und die Aufnahme 6 auch der Prüfling 2) beaufschlagt wird.

Grundsätzlich bilden der Prüfling 2, der Kopplungskörper 7, die Belastungswelle 9, die Kupplung 10, die Torsionswelle 11, die Belastungshülse 12 kontinuierliche Bauelemente mit verteilter Masse und einer endlichen Steifigkeit und auch der Belastungshebel 17 weist eine verteilte Masse und eine endliche Biegesteifigkeit auf. Somit bilden die in den Kraftfluss integrierten genannten Bauelemente grundsätzlich eine komplexe Schwingungskette mit einer komplexen dynamischen Schwingungsantwort infolge der Beaufschlagung mit der dynamischen Last 24 und der statischen Last 18. Zur Vereinfachung der folgenden Erläuterung soll angenommen werden, dass lediglich der Prüfling 2 und die Torsionswelle 11 eine endliche Steifigkeit, aber keine Masse besitzen, während die anderen genannten Bauelemente als ideal starr, aber massebehaftet angenommen werden. Ein derartiger idealisierter Zustand kann tatsächlich durch entsprechende Dimensionierung der Bauelemente angenähert werden oder es erfolgt der Betrieb der Resonanz-Torsionsprüfeinrichtung 1 mit Frequenzen der dynamischen Last 24, für welche das Schwingungsverhalten mit dieser Annahme hinreichend genau beschrieben werden kann. Aber auch bei komplexerer Dynamik des vorliegenden Torsions-Schwingungssystems 26 mit verteilten Massen und Steifigkeiten gilt die vorliegende Erläuterung entsprechend.

Unter der zuvor erläuterten vereinfachenden Annahme führt die statische Prüflastkomponente 20 zu einer ersten elastischen Auslenkung ϕ₁, welche der relative Drehwinkel der Endbereiche der Torsionswelle 11 ist, sowie zu einer Auslenkung ϕ₂ des Prüflings 2, welche dem relativen Drehwinkel der Endbereich des Prüflings 2 bzw. der relativen Verdrehung der Aufnahmen 4, 6 entspricht. Die Gesamtauslenkung ϕ, nämlich die Verdrehung der Belastungshülse 12 infolge der statischen Last 18, ergibt sich aus ϕ = ϕ₁ + ϕ₂.

Unter obiger vereinfachender Annahme ist eine starre Rotationsmasse 25, die über ein zugeordnetes Massenträgheitsmoment verfügt, mit dem Kopplungskörper 7, der Belastungswelle 9 und der Kupplung 10 gebildet. Diese Rotationsmasse 25 ist jeweils in ihren Endbereichen über Torsionsfedern abgestützt, welche in mechanischer Parallelschaltung auf die Rotationsmasse 25 wirken. Hierbei ist eine Torsionsfeder von dem Prüfling 2 gebildet, während die andere Torsionsfeder von der Torsionswelle 11 gebildet ist. Die Rotationsmasse 25 und die beiden parallel geschalteten Torsionsfedern bilden das Torsions-Schwingungssystem 26. Über die von dem Aktuator 23 erzeugte dynamische Last 24 kann das Torsions-Schwingungssystem 26 zu Torsionsschwingungen angeregt werden, wobei bei geeigneter Wahl der Anregungsfrequenz des Aktuators 23 auch eine Anregung des Torsions-Schwingungssystems 26 in Resonanz erfolgen kann. Die Torsionsschwingung erzeugt eine dynamische Prüflastkomponente 53, die auf den Prüfling 2 wirkt erzeugt. Insgesamt wird der Prüfling 2 mit einer Prüflast beaufschlagt, welche sich aus der Überlagerung der statischen Prüflastkomponente 20 mit der dynamischen Prüflastkomponente 53 ergibt. Tatsächlich oszilliert bei Fixierung des Einleitungsorts der statischen Last 18 infolge der sicher ergebenden Torsionsschwingung die zwischen Aktuator und Belastungshebel 17 wirkende statische Last 18.

Insbesondere um große Auslenkungen des Prüflings 2 bei verhältnismäßig großen statischen Prüflastkomponenten 20 und/oder dynamischen Prüflastkomponenten 53 zu ermöglichen, ist eine biegeweiche Einkopplung der statischen Last 18 erforderlich. Da der Durchmesser der Torsionswelle 11 infolge der wirkenden Beanspruchungen lediglich begrenzt reduziert werden kann, erfordert die weiche Einkopplung der statischen Last 18 eine große Längserstreckung der Torsionswelle 11 und damit der Resonanz-Torsionsprüfeinrichtung 1.

DE 10 2015 217 313 A1 beschreibt eine nicht gattungsgemäße Prüfeinrichtung, mittels welcher ein hydraulisches Bauteil, beispielsweise ein Kraftstoffeinspritzsystem für einen Verbrennungsmotor, wechselnden Drücken eines Hydraulikfluids ausgesetzt werden kann. Die Prüfeinrichtung verfügt über einen Arbeitszylinder, an welchen einerseits das zu prüfende hydraulische Bauteil angeschlossen ist und in welchem in eine gemeinsame Arbeitskammer von zwei Kolben begrenzt wird, die oszillierend bewegt werden. Werden die Kolben gegenläufig zueinander bewegt, entspricht das von einem Kolben verdrängte Volumen dem von dem anderen Kolben freigegebenen Volumen, so dass keine Druckpulsationen an dem zu prüfenden Bauteil erzeugt werden. Mit einer Veränderung der Phasenlage der Bewegung der beiden Kolben kann dann eine Druckpulsation erzeugt werden, deren Amplitude von der Phasenlage der Bewegung der Kolben abhängig ist. Ein Antrieb der beiden Kolben erfolgt jeweils über eine an einer Kurbelwelle abgestützten Pleuelstange. Die Kurbelwelle ist Bestandteil eines Torsionsschwingungssystems, welches über einen elektrischen Antriebsmotor zu Resonanzschwingungen angeregt werden kann. Über einen weiteren Motor kann eine Phasenlage der Resonanzschwingungen der beiden Torsionsschwingungssysteme erzeugt werden.

US 3,661,012 A offenbart eine nicht gattungsgemäße Prüfeinrichtung zur Messung der Torsionssteifigkeit eines faserförmigen Prüflings. Hierzu wird ein Endbereich des faserförmigen Prüflings mittels einer stationären Klemmeinrichtung gehalten. Der andere Endbereich des faserförmigen Prüflings wird an einer Klemme gehalten, an welcher mittels eines Aktuators eine Torsions-Prüflast erzeugt werden kann. Hierbei erfolgt eine Messung des Drehwinkels der Klemme und damit der Verdrillung des faserförmigen Prüflings infolge der wirkenden Torsions-Prüflast. Der Aktuator weist einen Antriebsmotor auf, der einen Zylinder in eine Rotationsbewegung versetzt. Ein mit der Klemme verbundener Rotor ist im Inneren des Zylinders angeordnet. In dem Zylinder ist ein niedrig-viskoses Fluid angeordnet, welches zwischen dem Zylinder und dem Rotor die Torsions-Prüflast überträgt. Hierbei ist die Torsions-Prüflast von dem Innendurchmesser des Zylinders, dem Außendurchmesser des Rotors, der Länge des Bereichs des Rotors, welcher sich in das viskose Fluid erstreckt, der Viskosität des Fluids und der Drehzahl, mit welcher der Zylinder verdreht wird, abhängig.

### AUFGABE DER ERFINDUNG

Der vorliegenden Erfindung liegt die Aufgabe zugrunde, eine alternative Ausgestaltung einer Resonanz-Torsionsprüfeinrichtung vorzuschlagen, welche insbesondere hinsichtlich
- einer Gestaltung des Torsions-Schwingungssystems,
- einer weichen Einkopplung einer statischen Last,
- einer axialen Baulänge und/oder
- Möglichkeiten zur Beeinflussung der Torsionssteifigkeit des Torsions-Schwingungssystems
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäß Resonanz-Torsionsprüfeinrichtung verfügt über eine Aufnahme für einen Prüfling. An die Aufnahme für den Prüfling ist ein Torsions-Schwingungssystem angekoppelt. Die Resonanz-Torsionsprüfeinrichtung weist einen Aktuator auf. Über den Aktuator kann das Torsions-Schwingungssystem in einer Resonanzfrequenz des Torsions-Schwingungssystems zu Torsionsschwingungen angeregt werden. Hierbei umfasst die Erfindung auch Ausführungsformen, bei welchen eine Resonanzüberhöhung ausgenutzt wird, auch wenn eine Anregung nicht exakt mit der Resonanzfrequenz erfolgt. Beispielweise wird unter einer Anregung in der Resonanzfrequenz auch eine Anregung subsummiert, bei welcher die Anregungsfrequenz um ± 5 %, ± 2 % oder ± 1 % von der Resonanzfrequenz des Torsions-Schwingungssystems abweicht und/oder eine Resonanzüberhöhung der Übertragungs- oder Verstärkungsfunktion des Torsions-Schwingungssystems nur zu mehr als 50 %, mehr als 60 %, mehr als 70 % oder mehr als 80 % genutzt wird. Die im Rahmen der Erfindung erzeugten Torsionsschwingungen des Torsions-Schwingungssystems rufen eine dynamische Prüflastkomponente der Prüflast hervor. In der erfindungsgemäßen Resonanz-Torsionsprüfeinrichtung ist eine Vorspanneinrichtung vorhanden, die eine statische Prüflastkomponente erzeugt. Die statische Prüflastkomponente und die dynamische Prüflastkomponente werden überlagert und beaufschlagen als Prüflast die Aufnahme (und damit den Prüfling).

Erfindungsgemäß wird erstmals vorgeschlagen, dass das Torsions-Schwingungssystem ein mechanisch-fluidisches Torsions-Schwingungssystem ist. Der Einsatz eines Fluids, bei dem es sich vorzugsweise um ein Gas handelt, dessen federnde Eigenschaft erfindungsgemäß ausgenutzt wird, in dem Torsions-Schwingungssystem ermöglicht vielfältige Einflussnahmen auf das Torsions-Schwingungssystem. So kann durch Wahl des Fluids eine Beeinflussung der Steifigkeit und/oder der Dämpfung des Torsions-Schwingungssystems erfolgen. Des Weiteren ist möglich, dass eine Beeinflussung einer Steifigkeit oder einer Resonanzfrequenz durch die Wahl des Drucks des Fluids erfolgt. Möglich ist alternativ oder kumulativ, dass über das Fluid der Betrag der statischen Prüflastkomponente vorgegeben wird, so dass je nach Vorgabe des Drucks des Fluids eine Veränderung der statischen Prüflastkomponente möglich ist. Wird für eine Bereitstellung einer Steifigkeit des Torsions-Schwingungssystems nicht (ausschließlich) eine Torsionswelle genutzt, sondern vielmehr die federnde Eigenschaft eines Fluids, kann infolge einer Verkürzung oder eines Entfalls der Torsionswelle eine axiale Baulänge der Resonanz-Torsionsprüfeinrichtung reduziert werden. Der Einsatz fluidischer Komponenten zur Kraftübertragung, Bereitstellung der Steifigkeit und/oder Bereitstellung der Dämpfung in dem Torsions-Schwingungssystem erweitert auch die Möglichkeiten für die Bauraumgestaltung, da mit einem Fluid eine beliebige Umlenkung der Kräfte und somit Verlagerung der Komponenten möglich ist.

Für die Ausgestaltung des mechanisch-fluidischen Torsions-Schwingungssystems gibt es vielfältige Möglichkeiten. Für eine von der Erfindung umfasste Ausführungsform weist das Torsions-Schwingungssystem einen Drehzylinder mit einem Drehflügel auf. Der Drehflügel wird mit der Torsionsschwingung des Torsions-Schwingungssystems verdreht, so dass dieser bspw. mit der Rotationsmasse des Torsions-Schwingungssystems gekoppelt sein kann. Der Drehflügel weist eine Flügelfläche auf, die eine fluidische Kammer, insbesondere ein Gaskammer oder eine Gasspeicher, begrenzt, deren Volumen von der Verdrehung des Drehflügels infolge der Torsionsschwingung abhängig ist. Somit führt die Torsionsschwingung des Torsions-Schwingungssystems zu einer Verdrehung des Drehflügels, welche eine Veränderung des Volumens der fluidischen Kammer zur Folge hat, welche durch eine Verdrängung des Fluids in der fluidischen Kammer und/oder durch eine Veränderung des Drucks des Fluids in der fluidischen Kammer ausgeglichen werden muss. Somit kann über die Komprimierung des in der fluidischen Kammer angeordneten Fluids eine (Teil-)Steifigkeit des Torsions-Schwingungssystems bereitgestellt werden oder das aus der Kammer durch den Drehflügel verdrängte Fluid kann einem anderweitigen Federelement zugeführt werden.

Die Erfindung umfasst Ausführungsformen, bei welchen lediglich eine Seite des Drehflügels eine fluidische Kammer begrenzt, während bspw. die andere Seite des Drehflügels eine mechanische (Dreh-)Feder beaufschlagen kann. Für eine bevorzugte Ausgestaltung der Erfindung verfügt der Drehflügel auf gegenüberliegenden Seiten jeweils über eine Flügelfläche. Die Flügelflächen begrenzen in diesem Fall entgegengesetzt zueinander wirkende fluidische Kammern. Das Volumen der Kammern ist dann gegenläufig von der Verdrehung des Drehflügels infolge der Torsionsschwingung des Torsions-Schwingungssystems abhängig. Dies soll bedeuten, dass eine Verkleinerung einer fluidischen Kammer mit einer entsprechenden Vergrößerung der anderen fluidischen Kammer einhergeht.

Für diese Ausgestaltung wird der Drehflügel mit der Torsionsschwingung hin- und her bewegt, womit alternierend das Volumen der fluidischen Kammern verändert wird und somit das Fluid in den Kammern alternierend komprimiert und dekomprimiert wird und/oder alternierend aus der Kammer verdrängt wird oder in diese zurückgeführt wird.

Möglich ist, dass in einer Gleichgewichtslage insbesondere ohne Applikation der dynamischen Prüflastkomponente der fluidische Druck in den Kammern gleich groß ist. In diesem Fall wird vorzugsweise die statische Prüflastkomponente auf andere Weise und unabhängig von dem Drehflügel mit den Kammern erzeugt. Für eine besondere Ausgestaltung der erfindungsgemäßen Resonanz-Torsionsprüfeinrichtung ist in den fluidischen Kammern eine Druckdifferenz herbeiführbar. Die Druckdifferenz hat eine Veränderung des Drehwinkels des Drehflügels zur Folge, welche wiederum zu einer Veränderung der statischen Prüflastkomponente der Prüflast führt. Somit kann durch die Gestaltung der Druckdifferenz eine Beeinflussung der statischen Prüflastkomponente erfolgen. Eine derartige Druckdifferenz kann bspw. durch mindestens eine Pumpe, über welche die fluidische Beaufschlagung der fluidischen Kammern erfolgt, herbeigeführt werden.

Grundsätzlich möglich ist, dass die fluidischen Kammern mit einem Gas gefüllt sind, so dass die Verdrehung des Drehflügels zu einer Komprimierung des Gases führt, womit eine Federsteifigkeit des Torsions-Schwingungssystems bereitgestellt werden kann. Für eine andere Ausgestaltung der Erfindung sind die fluidischen Kammern mit einem Hydraulikfluid, insbesondere einem Öl, gefüllt. Die Verdrehung des Drehflügels führt zu einer Verdrängung von Hydraulikfluid aus einer fluidischen Kammer, während Hydraulikfluid in die andere fluidische Kammer zurückströmen kann. Die fluidischen Kammern sind in diesem Fall jeweils mit Ausgleichszylindern gekoppelt, bei welchen es sich bspw. um Hydraulikspeicher handeln kann. Das aus der einen fluidischen Kammer verdrängte Fluid kann somit dem einen Ausgleichzylinder zugeführt werden, während Hydraulikfluid von dem anderen Ausgleichszylinder der anderen fluidischen Kammer zugeführt werden kann. Damit erfolgt die Bereitstellung der Federsteifigkeit für das Torsions-Schwingungssystem nicht unmittelbar mittels der fluidischen Kammern des Drehzylinders, sondern unter Einsatz der Ausgleichszylinder. Die Ausgleichszylinder können unter Umständen als Serienprodukte (hier für andere Zwecke, insbesondere der Gewährleistung eines Druck-und/oder Volumenausgleichs in einem Hydraulikkreis oder einer Leitung) vertriebene Produkte bezogen werden, womit diese kostengünstig sein können und eine hohe Serienreife aufweisen können.

Grundsätzlich können Ausgleichszylinder beliebiger Bauart eingesetzt werden. Für eine Ausgestaltung der erfindungsgemäßen Resonanz-Torsionsprüfeinrichtung finden Ausgleichszylinder Einsatz, die jeweils eine Hydraulikkammer und eine Gaskammer aufweisen. Die Hydraulickammer und die Gaskammer sind hierbei über ein bewegliches Trennelement voneinander getrennt. Die Bewegung des Trennelements kann dazu führen, dass sich das Volumen der Hydraulikkammer der Ausgleichszylinder verändert, womit die Hydraulikkammer Hydraulikfluid aus eine fluidischen Kammer aufnehmen kann oder Hydraulikfluid für die andere fluidische Kammer abgeben kann. Andererseits führt die Bewegung des Trennelements dazu, dass ein in der Gaskammer eingeschlossenes Gas komprimiert oder dekomprimiert werden kann, wodurch eine Federsteifigkeit des Torsions-Schwingungssystems bereitgestellt werden kann. Hierbei kann durch die Wahl des Gases und des Drucks des Gases in der Gaskammer eine Beeinflussung der Federsteifigkeit des Torsions-Schwingungssystems erfolgen.

Während grundsätzlich ein beliebiges Gas in den Gaskammern angeordnet sein kann, sind für einen Vorschlag der Erfindung die Gaskammern der Ausgleichszylinder mit Stickstoff gefüllt.

Gemäß einem weiteren erfindungsgemäßen Vorschlag ist eine Resonanzfrequenz-Einstelleinrichtung vorhanden, über welche eine Einstellung der Resonanzfrequenz des Torsions-Schwingungssystems möglich ist. Hierbei kann eine Einstellung der Resonanzfrequenz in Stufen oder stufenlos erfolgen. Für eine konstruktive Ausgestaltung der Resonanzfrequenz-Einstelleinrichtung gibt es im Rahmen der vorliegenden Erfindung vielfältige Möglichkeiten, von welchen im Folgenden lediglich einige Beispiele genannt werden sollen, ohne dass eine Einschränkung der Erfindung auf diese Beispiele erfolgen soll:
- So ist bspw. möglich, dass eine Veränderung der Resonanzfrequenz durch eine Veränderung des Trägheitsmoments der Rotationsmasse des Torsions-Schwingungssystems erfolgt, indem über die Resonanzfrequenz-Einstelleinrichtung in automatisierter Weise oder manuell Zusatzmassen beabstandet von der Rotationsachse zu der Rotationsmasse hinzugefügt werden oder ein Abstand der Zusatzmasse von der Rotationsachse verändert wird.
- Möglich ist auch, dass eine Veränderung der Resonanzfrequenz durch eine Veränderung des Volumens einer Kammer oder Gaskammer, bspw. durch Verbindung einer Zusatzkammer über ein durch die Resonanzfrequenz-Einstelleinrichtung verschließbares und öffenbares Ventil, verändert werden kann.
- Alternativ oder kumulativ möglich ist, dass die Resonanzfrequenz-Einstelleinrichtung über Ventilelemente oder Pumpen, Druckwellen oder Drucksenken verfügt, über welche ein Druck eines Gases in einer Gaskammer eines Ausgleichszylinders verändert werden kann.

Die zuvor erläuterten erfindungsgemäßen Maßnahmen können alternativ oder kumulativ zu aus dem Stand der Technik bekannten Maßnahmen Einsatz finden. So kann beispielsweise zusätzlich zu der Bereitstellung einer Steifigkeit des Torsion-Schwingungssystems über ein Fluid wie zuvor erläutert ergänzend eine mechanische Steifigkeit, beispielsweise einer Torsionswelle, bereitgestellt werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Ausgleichszylinder die Rede ist, ist dies so zu verstehen, dass genau ein Ausgleichszylinder, zwei Ausgleichszylinder oder mehr Ausgleichszylinder vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Resonanz-Torsionsprüfeinrichtung gemäß dem Stand der Technik in stark schematisierter Darstellung.
- **Fig. 2**: zeigt eine erfindungsgemäße Resonanz-Torsionsprüfeinrichtung in stark schematisierter Darstellung.
- **Fig. 3**: zeigt eine Ansicht III der Resonanz-Torsionsprüfeinrichtung gemäß Fig. 2.

### FIGURENBESCHREIBUNG

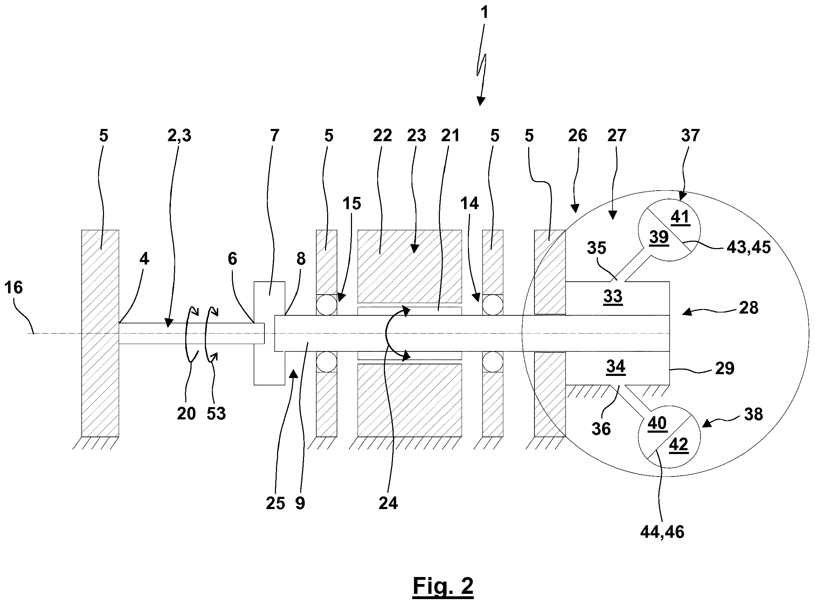

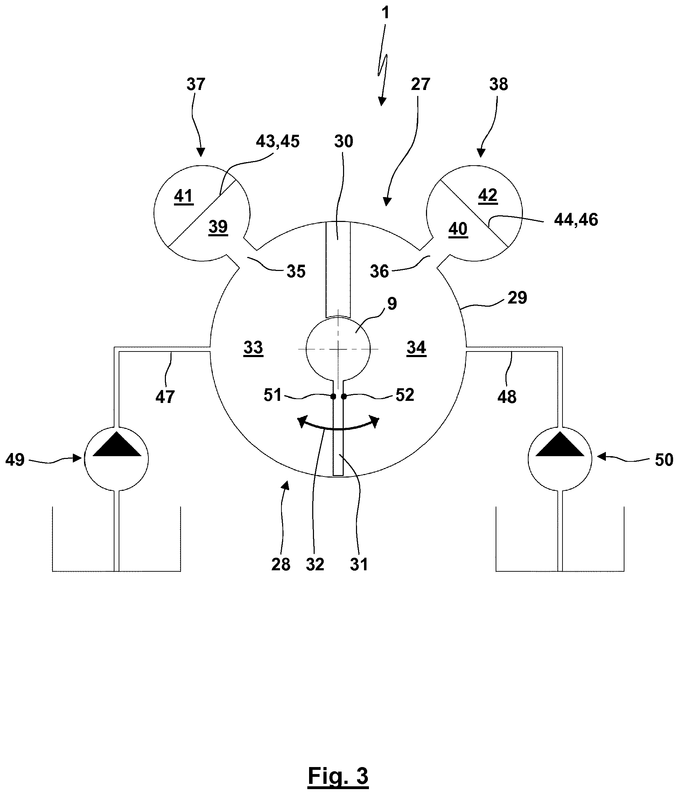

Für die Beschreibung der erfindungsgemäßen Ausführungsform der Resonanz-Torsionsprüfeinrichtung 1 gemäß **Fig. 2** **und** **3** werden teilweise die Bezugszeichen entsprechend Fig. 1 verwendet, sofern die mit den Bezugszeichen gekennzeichneten Bauelemente und Gestaltungsmerkmale hinsichtlich der Funktion und/oder Gestaltung entsprechend ausgebildet sind. Sofern im Folgenden keine andere Beschreibung erfolgt, gelten für die erfindungsgemäße Ausführungsform der Resonanz-Torsionsprüfeinrichtung 1 gemäß Fig. 2 und 3 die Ausführungen zu Fig. 1 entsprechend.

Gemäß Fig. 2 ist Resonanz-Torsionsprüfeinrichtung 1 mit einem Fundament 5, der Aufnahme 4, dem Prüfling 2, hier der Welle 3, der Aufnahme 6, dem Kopplungskörper 7, der Belastungswelle 9, den Lagern 14, 15, dem Rotor 21, dem Stator 22 und dem derart gebildeten Aktuator 23 entsprechend dem Ausführungsbeispiel gemäß Fig. 1 ausgebildet. Allerdings ist hier die Belastungswelle 9 nicht über eine Kupplung 10 mit der Torsionswelle 11, der Belastungshülse 12 und dem Hebel 17 verbunden zwecks Einkopplung der statischen Last 18. Vielmehr erstreckt sich hier die Belastungswelle 9 in dem dem Prüfling 2 abgewandten Endbereich in einen Drehzylinder 28. Der Drehzylinder 28 verfügt über ein zylindrisches Gehäuse 29, durch welches sich der Endbereich der Belastungswelle 9 zentrisch erstreckt. Ein Sperrflügel 30 des Gehäuses 29 erstreckt sich unter radial innenliegender Abdichtung bis zu der Belastungswelle 9. Die Belastungswelle 9 trägt unter drehfester Verbindung einen Drehflügel 31, dessen Drehwinkel 32 sich mit einer Verdrehung der Belastungswelle 9 verändert. Im radial außenliegenden Endbereich ist eine Stirnseite des Sperrflügels 30 dichtend gegenüber der zylindrischen Innenfläche des Gehäuses 29 des Drehzylinders 28 geführt. Somit wird der Innenraum des Drehzylinders 28 durch den Sperrflügel 30, die Belastungswelle 9 und den Drehflügel 31 in zwei fluidische Kammern 33, 34 unterteilt. Möglich ist hierbei, dass keine Abdichtung des Sperrflügels 30 gegenüber dem Drehzylinder 28 durch Dichtungen erfolgt, sondern hier nur eine bedingte Abdichtung durch Wahl einer geeigneten Spalthöhe erfolgt, die gegenüber dem Einsatz einer Dichtung eine grundsätzlich vorteilhafte Reduzierung der Reibung zur Folge hat. In diesem Fall muss aber ein Leckagestrom des Hydraulikfluids über den Spalt in Kauf genommen werden, welcher durch geeignete Regelung einer Zuführung von Hydraulikfluid zu den Kammern 33, 34 ausgeglichen werden muss. Mit einer Veränderung des Drehwinkels 32 des Drehflügels 31 vergrößert sich das Volumen einer fluidischen Kammer 33 (bzw. 34), während sich das Volumen der anderen fluidischen Kammer 34 (bzw. 33) entsprechend verkleinert.

Die fluidischen Kammern 33, 34 verfügen jeweils über einen Auslass 35, 36. Die Auslässe 35, 36 der Kammern 33, 34 sind jeweils mit einem Ausgleichszylinder 37, 38 verbunden. Die Ausgleichzylinder 37, 38 verfügen jeweils über eine Hydraulikkammer 39, 40 und eine Gaskammer 41, 42, welche durch ein Trennelement 43, 44, hier ein Membran 45, 46, voneinander getrennt sind.

In die Kammern 33, 34 münden über geeignete Anschlüsse hydraulische Leitungen 47, 48, über welche zur Vorgabe des hydraulischen Drucks in den Kammern 33, 34 eine Verbindung der Kammern 33, 34 unabhängig voneinander mit einer Drucksenke und einer Druckquelle möglich ist. Für das dargestellte Ausführungsbeispiel sind die Leitungen 47, 48 jeweils mit einer Pumpe 49, 50 verbunden. Möglich ist auch, dass die Leitungen 47, 48 an dieselbe Pumpe angeschlossen sind, wobei dann eine Leitung an die Saugseite der Pumpe angeschlossen ist, während die andere Leitung an die Druckseite der Pumpe angeschlossen ist, so dass dann von der Pumpe Fluid unmittelbar von einer Kammer 33 in die andere Kammer 34 (oder bei Umkehrung der Antriebsrichtung umgekehrt) gefördert werden kann.

Der Betrieb der erfindungsgemäßen Resonanz-Torsionsprüfeinrichtung 1 ist wie folgt:
Wird in der Kammer 33 (insbesondere von der Pumpe 49) ein Druck eines Hydraulikfluids p₁ erzeugt und in der Kammer 34 (insbesondere von der Pumpe 50) ein Druck eines Hydraulikfluids p₂ erzeugt, wobei p₁ ungleich p₂ ist, erzeugen die unterschiedlichen, an Flügelflächen 51, 52 des Drehflügels 31 wirkenden Drücke p₁, p₂ ein Torsionsmoment, welches auf die Belastungswelle 9 wirkt. Dieses Torsionsmoment wird als statische Prüflastkomponente 20 auf den Prüfling 2 aufgebracht. Über die Höhe der Druckdifferenz der Drücke p₁, p₂ kann dann die Größe der statischen Prüflastkomponente 20 vorgegeben werden.

Erfolgt die Anregung der Belastungswelle 9 mittels des Aktuators 23 mit der dynamischen Last 24, kommt es zu Schwingungen des Torsions-Schwingungssystems 26. In dem Torsions-Schwingungssystem wirkt als Federsteifigkeit einerseits die Federsteifigkeit des Prüflings 2. Andererseits führt jede Veränderung des Drehwinkels 32 der Belastungswelle 9 zur Verdrängung von Hydraulikfluid aus einer Kammer 33 (bzw. 34) über den Auslass 35 (bzw. den Auslass 36) in die Hydraulikkammer 39 (bzw. 40) des Ausgleichszylinders 37 (bzw. 38), während gleichzeitig Hydraulikfluid aus der Hydraulikkammer 40 (bzw. 39) über den Auslass 36 (bzw. 35) in die sich vergrößernde fluidische Kammer 34 (bzw. 33) strömen kann. Diese gegenläufige Veränderung der Volumina der Hydraulikkammern 39, 34 führen dazu, dass das Volumen der Gaskammer 41 (bzw. 42) verkleinert wird unter Kompression des darin enthaltenen Gases, während die andere Gaskammer 42 (bzw. 41) vergrößert wird unter Dekompression des darin angeordneten Gases. Somit gewährleistet das in den Gaskammern 41, 42 angeordnete Gas eine weitere, die Federsteifigkeit des Torsions-Schwingungssystems 26 beeinflussende Federwirkung.

Für eine abgewandelte Ausführungsform wird lediglich eine Kammer 33 mit einem Hydraulikfluid beaufschlagt und mit einem Ausgleichszylinder 37 verbunden. Eine Beaufschlagung des Belastungswelle 9 und des Drehflügels 31 entgegengesetzt zu der Beaufschlagung durch das Fluid in der Kammer 33 kann in diesem Fall durch eine auf die Belastungswelle 9 und/oder den Drehflügel 31 wirkende (Dreh-)Feder erfolgen.

Abweichend zu der dargestellten Ausführungsform kann auch anstelle des Aktuators 31 eine Erzeugung der dynamischen Prüflastkomponente 53 über einen Aktuator (insbesondere eine Pumpe) erfolgen, der Pulsationen des Druckes des Gases in mindestens einer Gaskammer 41, 42 und/oder des Druckes des Hydraulikfluids in mindestens einer Hydraulikkammer 39, 40 oder mindestens einer Kammer 33, 34 erzeugt.

Wenn im Rahmen der vorliegenden Beschreibung von einer Torsionslast die Rede ist, handelt es sich um ein Torsionsmoment.

### BEZUGSZEICHENLISTE

- 1: Resonanz-Torsionsprüfeinrichtung
- 2: Prüfling
- 3: Welle
- 4: Aufnahme
- 5: Fundament
- 6: Aufnahme
- 7: Kopplungskörper
- 8: Aufnahme
- 9: Belastungswelle
- 10: Kupplung
- 11: Torsionswelle
- 12: Belastungshülse
- 13: Lager
- 14: Lager
- 15: Lager
- 16: Längs- und Rotationsachse
- 17: Belastungshebel
- 18: statische Last
- 19: Hebelarm
- 20: statische Prüflastkomponente
- 21: Rotor
- 22: Stator
- 23: Aktuator
- 24: dynamische Last
- 25: Rotationsmasse
- 26: Torsions-Schwingungssystem
- 27: Vorspanneinrichtung
- 28: Drehzylinder
- 29: Gehäuse
- 30: Sperrflügel
- 31: Drehflügel
- 32: Drehwinkel
- 33: fluidische Kammer
- 34: fluidische Kammer
- 35: Auslass
- 36: Auslass
- 37: Ausgleichszylinder
- 38: Ausgleichszylinder
- 39: Hydraulikkammer
- 40: Hydraulikkammer
- 41: Gaskammer
- 42: Gaskammer
- 43: Trennelement
- 44: Trennelement
- 45: Membran
- 46: Membran
- 47: Leitung
- 48: Leitung
- 49: Pumpe
- 50: Pumpe
- 51: Flügelfläche
- 52: Flügelfläche
- 53: dynamische Prüflastkomponente

## Patentansprüche

1. Resonanz-Torsionsprüfeinrichtung (1) zur Belastung eines Prüflings (2) mit einer Torsionslast mit
a) einer Aufnahme (6) für den Prüfling (2),
b) einem Torsions-Schwingungssystem (26), welches an die Aufnahme (6) angekoppelt ist,
c) einem Aktuator (23), über welchen das Torsions-Schwingungssystem (26) in einer Resonanzfrequenz des Torsions-Schwingungssystems (26) zu Torsionsschwingungen angeregt werden kann, wobei die Torsionsschwingungen des Torsions-Schwingungssystems (26) eine dynamische Prüflastkomponente (53) der Torsionslast hervorrufen, und
d) einer Vorspanneinrichtung (27), welche eine statische Prüflastkomponente (20) der Torsionslast erzeugt,
e) wobei die statische Prüflastkomponente (20) und die dynamische Prüflastkomponente (53) überlagert als Torsionslast auf die Aufnahme (6) und damit auf den Prüfling wirken,
**dadurch gekennzeichnet, dass**
f) das Torsions-Schwingungssystem (26) ein mechanisch-fluidisches Torsions-Schwingungssystem ist.

2. Resonanz-Torsionsprüfeinrichtung (1) nach Anspruch 1, **dadurch gekennzeichnet, dass** das Torsions-Schwingungssystem (26) einen Drehzylinder (28) mit einem Drehflügel (31) aufweist, der
a) infolge der Torsionsschwingung des Torsions-Schwingungssystem (26) verdreht wird und
b) eine Flügelfläche (51; 52) aufweist, die eine fluidische Kammer (33; 34) des Drehzylinders (28) begrenzt, deren Volumen von der Verdrehung des Drehflügels (31) infolge der Torsionsschwingung abhängig ist.

3. Resonanz-Torsionsprüfeinrichtung (1) nach Anspruch 1, **dadurch gekennzeichnet, dass** das Torsions-Schwingungssystem (26) einen Drehzylinder (28) mit einem Drehflügel (31) aufweist, der
a) infolge der Torsionsschwingung des Torsions-Schwingungssystem (26) verdreht wird und
b) auf gegenüberliegenden Seiten jeweils eine Flügelfläche (51, 52) aufweist, wobei die Flügelflächen (51, 52) entgegengesetzt zueinander wirkende fluidische Kammern (33, 34) des Drehzylinders (28) begrenzen, deren Volumen gegenläufig von der Verdrehung des Drehflügels (31) infolge der Torsionsschwingung abhängig ist.

4. Resonanz-Torsionsprüfeinrichtung (1) nach Anspruch 3, **dadurch gekennzeichnet, dass** in den fluidischen Kammern (33, 34) eine Druckdifferenz herbeiführbar ist, welche eine Veränderung eines Drehwinkels (32) des Drehflügels (31) und damit eine Veränderung der statischen Prüflastkomponente (20) der Torsionslast zur Folge hat.

5. Resonanz-Torsionsprüfeinrichtung (1) nach Anspruch 3 oder 4, **dadurch gekennzeichnet, dass** die fluidischen Kammern (33, 34)
a) mit Hydraulikfluid gefüllt sind und
b) mit Ausgleichszylindern (37, 38) gekoppelt sind.

6. Resonanz-Torsionsprüfeinrichtung (1) nach Anspruch 5, **dadurch gekennzeichnet, dass** die Ausgleichzylinder (37, 38) eine Hydraulikkammer (39; 40) und eine Gaskammer (41; 42) aufweisen, welche über ein bewegliches Trennelement (43; 44) voneinander getrennt sind.

7. Resonanz-Torsionsprüfeinrichtung (1) nach Anspruch 6, **dadurch gekennzeichnet, dass** das Trennelement (43; 44) eine Membran (45; 46) ist.

8. Resonanz-Torsionsprüfeinrichtung (1) nach Anspruch 6 oder 7, **dadurch gekennzeichnet, dass** die Gaskammer (41; 42) mit Stickstoff gefüllt ist.

9. Resonanz-Torsionsprüfeinrichtung (1) nach einem der vorhergehenden Ansprüche, **dadurch gekennzeichnet, dass** eine Resonanzfrequenz-Einstelleinrichtung vorhanden ist, über welche eine Einstellung der Resonanzfrequenz des Torsions-Schwingungssystems (26) möglich ist.

## Claims

1. Torsional resonance testing device (1) for biasing a test specimen (2) with a torsional load comprising
a) an accommodation (6) for the test specimen (2),
b) a torsional oscillating system (26) coupled to the accommodation (6),
c) an actuator (23) by which it is possible to excite the torsional oscillating system (26) with a resonance frequency of the torsional oscillating system (26) for executing torsional oscillations, the torsional oscillations of the torsional oscillating system (26) inducing a dynamic test load component (53) of the torsional load and
d) a pretensioning device (27) which generates a static test load component (20) of the torsional load,
e) the static test load component (20) and the dynamic test load component (53) acting in a superimposed way as the torsional load on the accommodation (6) and so on the test specimen,
**characterised in that**
f) the torsional oscillating system (26) is a mechanical-fluidic torsional oscillating system.

2. Torsional resonance testing device (1) of claim 1, **characterised in that** the torsional oscillating system (26) comprises a rotation cylinder (28) with a rotating wing (31)
a) which is rotated due to the torsional oscillations of the torsional oscillating system (26) and
b) which comprises a wing surface (51; 52) which limits a fluidic chamber (33; 34) of the rotation cylinder (28), the volume of the fluidic chamber (33; 34) depending on the rotation of the rotating wing (31) due to the torsional oscillation.

3. Torsional resonance testing device (1) of claim 1, **characterised in that** the torsional oscillating system (26) comprises a rotation cylinder (28) and a rotating wing (31)
a) which is rotated due to the torsional oscillations of the torsional oscillating system (26) and
b) comprises wing surfaces (51, 52) on each of opposing sides, the wing surfaces (51, 52) limiting fluidic chambers (33, 34) of the rotation cylinder (28) acting in opposite directions, the volume of the fluidic chambers (33, 34) changing in opposite directions from the rotation of the rotating wing (31) due to the torsional oscillations.

4. Torsional resonance testing device (1) of claim 3, **characterised in that** it is possible to induce a pressure difference in the fluidic chambers (33, 34) which leads to a change of the rotational angle (32) of the rotating wing (31) and so to a change of the static test load component (20) of the torsional load.

5. Torsional resonance testing device (1) of claim 3 or 4, **characterised in that** the fluidic chambers (33, 34)
a) are filled with hydraulic fluid and
b) are coupled to compensating cylinders (37, 38).

6. Torsional resonance testing device (1) of claim 5, **characterised in that** the compensating cylinders (37, 38) comprise a hydraulic chamber (39; 40) and a gas chamber (41; 42) which are separated from each other by a movable separating element (43; 44).

7. Torsional resonance testing device (1) of claim 6, **characterised in that** the separating element (43; 44) is a membrane (45; 46).

8. Torsional resonance testing device (1) of claim 6 or 7, **characterised in that** the gas chamber (41; 42) is filled with nitrogen.

9. Torsional resonance testing device (1) of one of the preceding claims, **characterised in that** a resonance frequency adjusting device is provided by which it is possible to adjust the resonance frequency of the torsional oscillating system (26).

## Revendications

1. Banc de test de torsion par résonance (1) destiné à soumettre une éprouvette (2) à une charge de torsion, avec
a) un logement (6) pour l'éprouvette (2),
b) un système d'oscillations de torsion (26), lequel est couplé au logement (6),
c) un actionneur (23) par le biais duquel le système d'oscillations de torsion (26) peut être excité en oscillations de torsion dans une fréquence de résonance du système d'oscillations de torsion (26), les oscillations de torsion du système d'oscillations de torsion (26) suscitant une composante dynamique de charge de test (53) de la charge de torsion, et
d) un équipement de pré-tension (27), lequel produit une composante statique de charge de test (20) de la charge de torsion,
e) la composante statique de charge de test (20) et la composante dynamique de charge de test (53) agissant de façon superposée en tant que charge de torsion sur le logement (6) et donc sur l'éprouvette,
**caractérisé en ce que**
f) le système d'oscillations de torsion (26) est un système d'oscillations de torsion mécanique-fluide.

2. Banc de test de torsion par résonance (1) selon la revendication 1, **caractérisé en ce que** le système d'oscillations de torsion (26) comporte un cylindre rotatif (28) avec une ailette rotative (31) qui
a) est mise en rotation à la suite de l'oscillation de torsion du système d'oscillations de torsion (26) et
b) comporte une surface d'ailette (51 ; 52) qui limite une chambre fluidique (33 ; 34) du cylindre rotatif (28) dont le volume est fonction de la mise en rotation de l'ailette rotative (31) à la suite de l'oscillation de torsion.

3. Banc de test de torsion par résonance (1) selon la revendication 1, **caractérisé en ce que** le système d'oscillations de torsion (26) comporte un cylindre rotatif (28) avec une ailette rotative (31) qui
a) est mise en rotation à la suite de l'oscillation de torsion du système d'oscillations de torsion (26) et
b) comporte, sur des côtés opposés, respectivement une surface d'ailette (51, 52), les surfaces d'ailette (51, 52) limitant des chambres fluidiques (33, 34) du cylindre rotatif (28) qui agissent de façon opposée entre elles, dont le volume est inversement fonction de la mise en rotation de l'ailette rotative (31) à la suite de l'oscillation de torsion.

4. Banc de test de torsion par résonance (1) selon la revendication 3, **caractérisé en ce que,** dans les chambres fluidiques (33, 34), une différence de pression peut être provoquée, laquelle a pour effet une modification de l'angle de rotation (32) de l'ailette rotative (31) et donc une modification de la composante statique de charge de test (20) de la charge de torsion.

5. Banc de test de torsion par résonance (1) selon la revendication 3 ou 4, **caractérisé en ce que** les chambres fluidiques (33, 34)
a) sont remplies de fluide hydraulique et
b) sont couplées à des cylindres de compensation (37, 38).

6. Banc de test de torsion par résonance (1) selon la revendication 5, **caractérisé en ce que** les cylindres de compensation (37, 38) comportent une chambre hydraulique (39 ; 40) et une chambre à gaz (41 ; 42), lesquelles sont séparées l'une de l'autre par le biais d'un élément de séparation (43 ; 44) mobile.

7. Banc de test de torsion par résonance (1) selon la revendication 6, **caractérisé en ce que** l'élément de séparation (43 ; 44) est une membrane (45 ; 46).

8. Banc de test de torsion par résonance (1) selon la revendication 6 ou 7, **caractérisé en ce que** la chambre à gaz (41 ; 42) est remplie d'azote.

9. Banc de test de torsion par résonance (1) selon l'une des revendications précédentes, **caractérisé par** la présence d'un équipement de réglage de la fréquence de résonance par le biais duquel un réglage de la fréquence de résonance du système d'oscillations de torsion (26) est possible.
